# EUROPEAN PATENT APPLICATION

(11) **EP 1 215 114 A1**
(43) Date of publication of application: **19.06.2002**
(21) Application number: 00127308.5
(22) Date of filing: 13.12.2000
(51) Int. Cl.: B63B 35/04, H02G 1/10

(54) **Method of laying an underwater cable**

(71) Applicant: PIRELLI CAVI E SISTEMI S.p.A., 20126 Milano (IT)
(72) Inventor: Aleo, Sebastiano, 20162 Milano (IT); Ferrari, Gianmarco, 24040 Ciserano (BG) (IT); Mattiello, Luigi, 19032 Lerici (SP) (IT)
(74) Representative: Bottero, Carlo

(57) **Abstract**

The invention relates to a method of laying an underwater cable on a seabed from a vessel, said method comprising the steps of: paying out the cable from the vessel while the vessel moves in a forward direction so that the cable reaches a touchdown point on the seabed at a longitudinal distance *d*_{c} from the vessel, and operating a side scan sonar (SSS) in an immersed state at a longitudinal distance *d*ₛ from the vessel and positioned with respect to the vessel in a direction substantially opposite to said forward direction so as to detect the cable.

## Description

### BACKGROUND OF THE INVENTION

### Field of the invention

The present invention relates to a method for installing underwater cables, such as telecommunication cables (e.g., fibre optic cables) or electrical power cables, from a cable ship.

### Related Art

In underwater cable installations monitoring of the cable touchdown is usually assisted by self-propelled remotely operated vehicles (ROV's). A ROV can be operated either from the cable ship or from a separate surface vessel. Equipped with TV cameras and lights, the ROV examines the seabed at the cable touchdown point. Example of an installation method assisted by ROV is given in US patent No. 5,722,793, where the ROV, carrying vision equipment (TV cameras) and ultrasound location systems and having buoyancy control means, is connected to the cable laying ship through an umbilical.

A few systems have been proposed in order to improve control of the cable position during installation. In European patent application No. 0833009 a local ROV is controlled from the cable ship via a tether cable, which can be reeled in and out with a winch arrangement on a guideweight gear. The local ROV, provided with lights, cameras and auto-distance equipment, can be manoeuvred quite close to the touchdown point. The guideweight gear is suspended and controlled from the cable ship by means of an umbilical and it includes sonars, altimeters and transponder/responder equipment. The gear is kept at a safe distance from the cable touchdown point, whereas monitoring of the touchdown area is performed by the visual means installed on the ROV.

The inventors have observed that by using a ROV equipped with TV cameras inspection of the seabed will be restricted only to an area that is very close to the cable touchdown point.

Submarine cables are commonly laid on tracks selected after a route survey. During route survey, topographical features and objects on the sea floor are monitored and recorded. To this purpose, sonars, i.e., devices comprising acoustical transducing sources and transducing receivers, have been employed. Sonar systems are used also in cable-locating methods. US patent No. 5,025,423 describes a sonar system mounted on a ROV where suitable signal sequences are used to identify buried telecommunication cables.

The inventors have found that the actual position of the cable might not exactly match the pre-fixed cable track determined by a previously carried out route survey because of modifications of the sea floor occurred during the time elapsed between route survey and cable installation.

Amongst the existing sonar systems, the side scan sonar (SSS) bears the advantage of providing a wide-range detailed topography of the seabed. A SSS is either towed or mounted on an underwater vehicle and it is moved in a forward direction. A very narrow acoustical beam in the horizontal plane, perpendicular to the forward direction, yet sufficiently broad in the vertical plane, allows obtaining echoes from large lateral distances from the transducers. US patent No. 4,445,186 describes a method of underwater mapping employing a SSS embodied in a tow fish, which is towed by a vessel. Article "FOCUS - a versatile, stable, controllable towed sensor platform" by D.R. Huntigton, paper submitted at Underwater Intervention '94 (San Diego, CA, USA), February 1994, describes a remotely operated towed vehicle (ROTV) with a SSS for hydrographic survey.

Japanese patent application No. 7-031042 discloses a method of laying a submarine cable while monitoring the seabed with a SSS placed under the bow of the cable ship. The forward position of the boat can be monitored so that obstacles can be found and avoided.

The inventors have been faced with the problem that in some installations the cable track has to respect a given distance from an object that is present on the sea floor, such as a cable, a pipeline, hydrophone arrays, wrecks or merely an anomaly on the sea floor. This distance can be relatively large, from a few tens up to a few hundreds of meters. The requirement of maintaining a predetermined distance between the laid cable and an existing object makes necessary the simultaneous detection of both the touchdown point and the object during laying.

Finally, a rocky outcropping or a depressed area of the sea floor creates an unsupported length of the cable, or cable free span. A survey has to be performed to assess which kind of remedial work can be made, e.g., rock dumping, to correct the free span. The remedial work is usually performed after the operation of cable laying and requires an evaluation of the cross-section of the outcropping (or depressed) areas as well as of the free span lengths. It would be therefore desirable to have a survey of the seabed during cable installation, which enables also an evaluation of the cross-section of the outcropping areas and the length of the cable free spans. In this way it would be possible to quickly determine at the same time as cable laying the remedial work that is necessary to correct the free span.

### SUMMARY OF THE INVENTION

The inventors have found out that by using a side scanning sonar (SSS) for monitoring the cable touchdown area it is possible to carry out during cable installation a wide-range detailed survey of the touchdown area and of the cable being laid.

According to one aspect the invention relates to a method of laying an underwater cable on a seabed from a vessel, said method comprising the steps of: paying out the cable from the vessel while the vessel moves in a forward direction so that the cable reaches a touchdown point on the seabed at a longitudinal distance *d*_{c} from the vessel, and operating a side scan sonar (SSS) in an immersed state at a longitudinal distance *d*_{S} from the vessel and positioned with respect to the vessel in a direction substantially opposite to said forward direction so as to detect the cable.

The new laying method is suitable for installations in which a predetermined distance from an existing object on the seabed needs to be respected. Thanks to the SSS's wide scanned area and detailed mapping, the present method enables the simultaneous inspection of both the touchdown area and the position of the cable relative to known or previously non-identified objects on the seabed. According to the invention, cables can be safely laid while respecting the required distance from the assigned targets. In addition, a highly detailed monitoring of small topographic features on the sea floor can be carried out at the actual touchdown area. In case of formation of cable free spans, the present method allows a quick and fairly accurate evaluation of the free span length and of the magnitude of the outcropping (or depressed) seabed contours.

Preferably, the longitudinal distance *d*_{S} of the SSS from the vessel is comprised between 80% and 130% of the longitudinal distance *d*_{c}, if *d*_{c} is greater than 50 m and is comprised between (*d*_{c} -10 m) and (*d*_{c} + 10 m) if *d*_{c} is less than or equal to 50 m.

More preferably, *d*_{S} is comprised between 90% and 120% of the longitudinal distance *d*_{c}, if *d*_{c} is greater than 50 m.

The SSS, generally mounted on a carrier such as a tow fish, can be towed from the vessel (cable ship or auxiliary vessel). The SSS can be installed on ROTV or on a ROV linked to the vessel. The ROV or the ROTV can be equipped with auto-heading and auto-depth control systems.

Advantageously, the side scan sonar comprises a pair of side-looking acoustic transducers, or transducer arrays, placed on the port and starboard sides, each transducer transmitting acoustic signals and receiving reflected acoustic signals, these reflected signals including the echoes reflected by the topographic features on the seabed. The reflected acoustic signals can be converted into electric output signals and stored in a recording medium. The stored signals can be displayed on a display so as to visualise echoes originating from the port and starboard sides.

At least part of the information relative to the stored signals can be transferred to a navigation display on which the geographical co-ordinates are visualised. Said stored signals can be compared with the co-ordinates of the actual cable position at a given time. The co-ordinates of the nominal cable position can be visualised on the navigation display and compared with the co-ordinates of the actual cable position.

The invention has also to do with a particular assembling and use of commercial systems, which are commonly employed in the offshore industry, together with operational procedures that enable cable installation while respecting a predetermined distance from an object.

The invention will be better understood from the following detailed description, given solely by way of example, which should be considered in conjunction with the accompanying drawings in which:
FIG. 1 schematically illustrates laying down of an underwater cable.
FIG. 2 schematically illustrates cable laying and monitoring system in a first embodiment of the present invention.
FIG. 3 schematically illustrates cable laying and monitoring system in a second embodiment of the present invention.
FIG. 4 is a diagrammatic illustration of logging of the signals originating from the side scan sonar with reference to the embodiment shown in Fig. 2.

### DETAILED DESCRIPTION OF THE PREFERRED EMBODIMENT

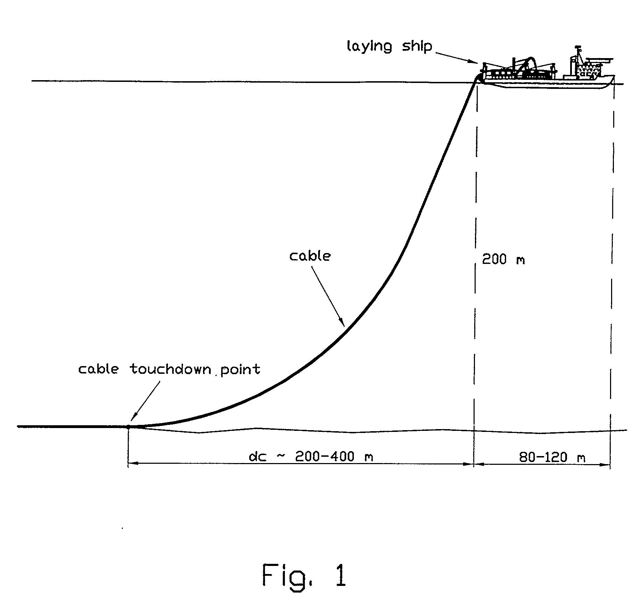

Figure 1 schematically illustrates the installation of an underwater cable with a numerical example of the typical distances involved. Distance *d*_{c} indicates the longitudinal distance, i.e., projected on the seabed plane, between the ship's laying sheave (or chute) and the cable touchdown point.

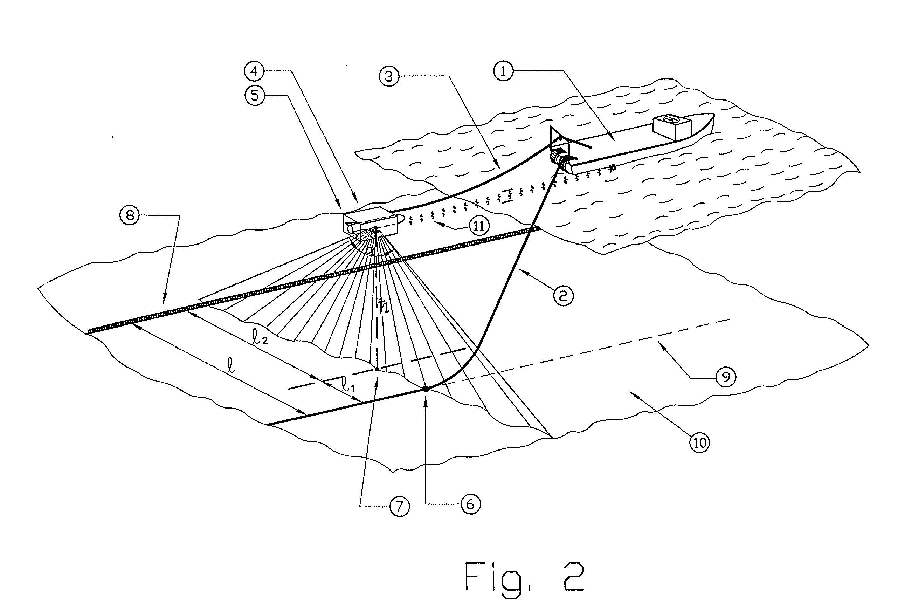

The illustrative example of the invention is a method of laying a cable at a given distance from a reference target, such as an unburied pipeline or cable. Figure 2 shows a cable 2, e.g., a fibre optic cable, which is being paid-out from the ship's laying sheave (or chute) of a cable laying ship 1 (as the ship moves forward) and laid down to the seabed 10. In Fig. 2, there are also shown an object placed on the seabed, which is a pipeline 8 in this example, and a remotely operated vehicle (ROV) 4 connected to the cable ship through an umbilical 3. A side scan sonar (SSS) 5, which scans a seabed area over an angle α, is mounted on the ROV. The scanned area comprises the cable touchdown point 6 and the pipeline 8. Dashed line 9 represents the nominal cable track, as determined by the requirement of respecting a pre-fixed route or a predetermined distance from the object 8 (or both).

In the example shown in Fig. 2, water depth is about 200 m and cable touchdown point 6 is about 200 m astern from the ship, i.e., the longitudinal distance *d*_{c} between the ship's sheave and the cable touchdown point is about 200 m. Let's assume that the paid-out cable 2 is a steel armoured cable of 25 mm of diameter and that the lateral distance ℓ between the cable touchdown point 6 and the object 8 (pipeline) is of 80 m. In order to detect both the cable 2 and the pipeline 8, the SSS sensor 5 flies at an altitude *h*, which in this example is of 50 m, from the seabed 11. To optimise target detection in the areas of interest, it is preferable to keep the SSS laterally shifted from either target. In other words, it is preferable that the SSS vertical footprint 7 is placed at a lateral distance from both the cable touchdown 6 and the pipeline 8, said distance depending on the water depth. In this particular example the distance ℓ₁ is of 20 m and ℓ₂ is of 60 m. The ROV, and thus the SSS, is kept at about 200 m behind the ship, i.e., at about the same longitudinal position as the cable touchdown point. SSS co-ordinates are provided by an hydroacoustic positioning system, which includes acoustic transponders or responders mounted on the ROV and transducers installed on the cable ship hull. The ROV heading is logged to the ship for monitoring the positions of the targets detected by the SSS. The acoustical positioning path 11 of the ROV relative to the cable ship is indicated in Fig. 2. The cable ship is usually equipped with absolute positioning systems, such as global positioning systems (GPS), differential global positioning systems (DGPS), ultra short base line (USBL), gyrocompass or motion compensation devices. Those devices can be integrated in the navigation system, in order to have the possibility to assess in real time the absolute position of any surface or underwater sensor with respect to the reference geodetic datum.

The altitude of the flying SSS sensor with respect to the seabed is usually chosen depending on the lateral distances one wants to monitor (i.e., the scanning angle α) and the lateral resolution of the SSS. The SSS altitude can range from about 5 meters above the sea floor to about 5 meters below the sea surface. The range of acceptable altitudes in each practical case is also subject to environmental conditions, such as ship propeller's wake and swell disturbances.

Turning now the attention to the lateral resolutions of the SSS systems, by using for example a 100 KHz-class SSS of the type commercially available nowadays, a steel armoured cable of 25 mm diameter (e.g., fibre optic cable) can be accurately and in real time detected at distances up to about 100 m in case of reflective (e.g., sandy or rocky) sea floor. This distance increases if seabed surfaces are less reflective. In case of cables of larger diameters, e.g., a power cable of 80-120 mm, distances of 300 m or more can be detected. To achieve a higher resolution for shorter lateral distances a SSS of higher frequencies may be used.

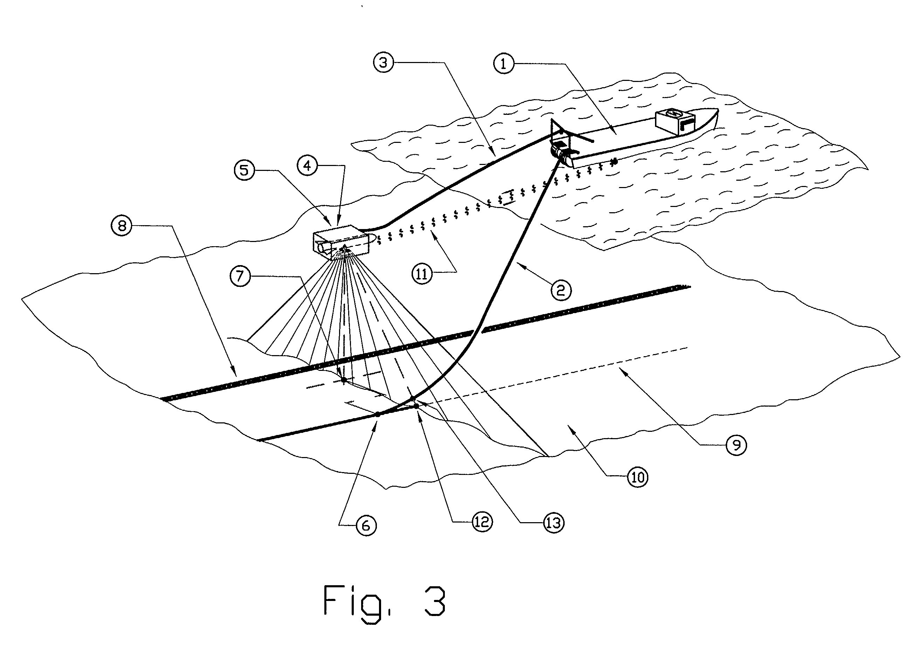

The detectable distance can be increased of about 30% when SSS monitoring takes place ahead of the touchdown point, rather than about above it as in the example described in Fig. 2. Monitoring by using a SSS flying ahead of the touchdown point is shown in Fig. 3. With this layout, target discrimination is improved because the cable is seen suspended and its shadow becomes visible on the sea floor. In Fig. 3 the ROV 4 mounting the SSS 5 flies ahead of the touchdown point 6 and monitors both the suspended cable at the point 13 and its shadow on the sea floor 12. The longitudinal distance, i.e., projected on the seabed plane, *d*_{S} between the ship's laying sheave (or chute) and the SSS vertical footprint 7 ranges between 80% and 100% of the longitudinal distance *d*_{c} between the ship's sheave and the touchdown point 6. Generally, distances *d*_{S} smaller than 80% of *d*_{c} are not practicable in deep waters. In shallow waters, i.e., with a depth up to about 100 m, *d*_{c} can be relatively short, for example 50 m or even shorter. In shallow waters and in case of *d*_{c} equal to 50 m or shorter, feasible distances *d*_{S} can be comprised between *d*_{c} and (*d*_{c} - 10 m).

Another option is to position the SSS sensor behind the cable touchdown point. This option could be advantageous when the sea floor presents low reflectivity. When the SSS flies behind the touchdown point, monitoring occurs on the cable already laid down on the seabed. This could be advantageous when one wants to detect the actual position of the cable "at rest", since laying position may be affected by the pulling action of the advancing ship or by strong sea currents. In this case, the longitudinal distance *d*_{S} between the ship's sheave and the SSS vertical footprint 7 can range between 100% and 130% of the longitudinal distance *d*_{c} between the ship's sheave and the touchdown point 6. Generally, distances *d*_{S} larger than 130% of *d*_{c} are not practicable in deep waters, as it would be difficult to operate while maintaining the predefined route. In shallow waters and with *d*_{c} of 50 m or shorter, feasible distances *d*_{S} can be comprised between (*d*_{c} +10 m) and *d*_{c}.

Let's now suppose the presence of a cable free span due to an outcropping (or depressed) region on the sea floor. Along the suspended length of the cable the SSS will detect the signal originating from the cable shadow in addition to that originating from the cable itself. The length and the height of the free span can be thus easily derived as well as the height of the seabed irregularity (outcropping or depressed region). The analysis of the sea floor irregularity can be made simultaneously with the cable laying operation.

Acoustic signals produced by the SSS need to be converted, in order to produce the image of the underwater scanned area, and interpreted, usually by an operator. The basic concepts of the functioning of a SSS can be seen in US patent No. 4,445,186, previously cited, and in US patent No. 4,802,148. Briefly, a pair of side-looking acoustical transducers, or transducer arrays, is placed on the port and starboard sides, respectively, of the SSS supporting carrier, e.g., the ROV. Transducers propagate acoustic signals to either side through the water. The transmitted acoustic signals are reflected from the topographic features on the sea floor and they are returned to the sonar. The return signals are converted to electrical signals and recorded in a computer and displayed on a display screen of a computer.

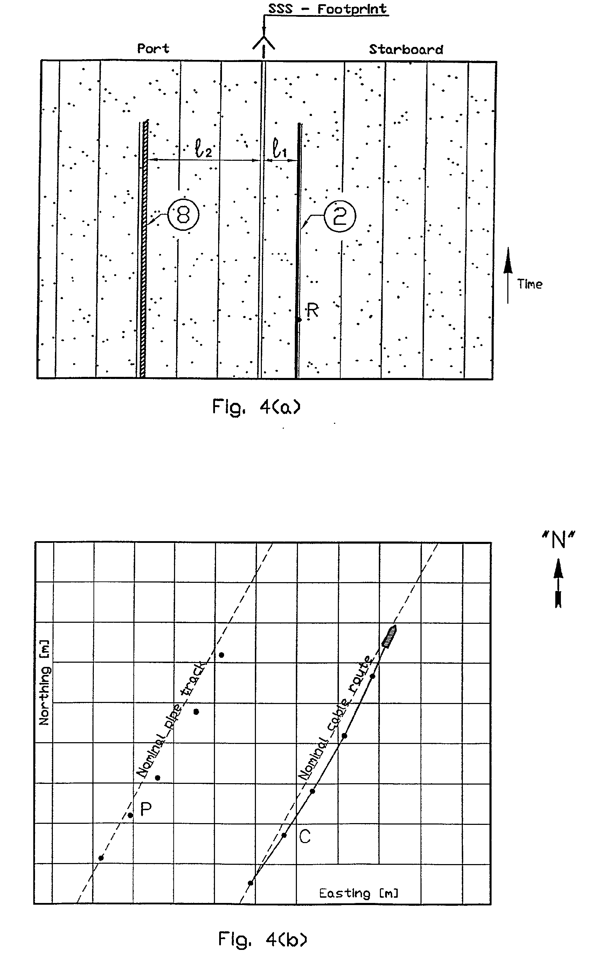

Logging of the signals will be illustrated with reference to the example of Fig. 2. Figure 4(a) schematically shows the recording on the SSS display screen during laying. Echoes reflected from the pipeline 8 on the port side and echoes reflected from the cable 2 on the starboard side can be monitored on the SSS display. The central vertical line represents the SSS vertical footprint 7 (see Fig. 2).

During laying, the operator controls the SSS display [Fig. 4(a)] and the ROV co-ordinates on the navigation display [Fig. 4(b)]. With the purpose of monitoring in real time the distance between the pipeline and the cable, the following operations will be carried out. The operator at a given time *t*₁, for instance at the last SSS scan, records the position of the reflected echo from the cable 2, e.g., position R on the SSS display [Fig. 4(a)]. With the help of suitable software programs, this operation can be carried out by simply pointing with the cursor on the position R of the SSS display and by double clicking on said position in order to record it on the computer disk. Cable position R is automatically transferred to the navigation display, on which other useful data for the laying operation are visualised, such as the geo-grid, nominal pipe and cable tracks, coastlines and the bathymetric chart. Nominal cable and pipe tracks are indicated with dashed lines in Fig. 4(b). If an appropriate label is associated to the cable position on the navigation display of Fig. 4(b), for instance "C" for cable, this label is overlaid on the screen, visualising the position of the cable at the selected time *t*₁ (plus a few seconds necessary for the selection and transmission of the data).

Immediately after recording the cable position at *t*₁, the operator selects the pipeline position at *t*₂ (*t*₁ plus several seconds necessary to terminate the previous operations) on the SSS monitor. The real-time position of the pipeline is thus also transferred, visualised on the navigation display with a label, for instance "P" for pipeline [Fig. 4(b)]. If on the navigation display screen the positions "P" and "C" overlap the nominal tracks of the pipeline and cable, respectively, the operator receives, substantially in real time, the information that the actual tracks match the nominal routes.

On the other hand, if environmental parameters have led to a modification of the actual tracks with respect to the nominal routes, as in the example shown in Fig. 4(b), then a change in the navigation co-ordinates or in the installation parameters is necessary. The personnel responsible for the cable laying and the navigation route can act without delay accordingly, as the navigation display is a peripheral device located in the vessel everywhere it is needed.

By using the above described method, object tracks detected by the SSS are displayed on the navigation computer screen by means of a combined manual and automatic computing procedure, so that monitoring and, if necessary, modifications of the cable track can be timely and efficiently made.

Although the above description refers to a SSS mounted on a ROV, alternative embodiments can be considered without departing from the scope of the present invention. For instance, the SSS can be mounted on a tow fish or on a ROTV, towed by the cable ship. In this case, however, an almost constant advancing speed of the ship is required and operations are effectively controlled if the ship does not need to stop, e.g., to recover part of the paid-out cable.

In order to facilitate operations during laying of the cable, the SSS can be mounted on a ROV (or ROTV) platform equipped by auto-heading and auto-depth control. In this case, the monitoring system may be driven by the cable ship or a separate surface vessel with telemetry, so that the ROV (or ROTV) can be actively controlled without interfering with the installation.

A further alternative method is to employ a SSS mounted on a tow fish, ROV or ROTV linked to an auxiliary vessel rather than to the cable ship. Return sonar signals are transmitted from the auxiliary vessel to the cable ship via RF data link. In this case any interruption of the installing operation will be managed by the auxiliary vessel.

The further details of hardware and software necessary to carry out the invention are familiar to those skilled in the art. The above detailed description is only illustrative of the invention, which is not restricted to the preferred embodiments. Modifications and equivalents will be obvious to those with skill in the art and will not depart from the scope of the invention as it is defined by the following claims.

## Claims

1. A method of laying an underwater cable on a seabed from a vessel, said method comprising the steps of:
paying out the cable from the vessel while the vessel moves in a forward direction so that the cable reaches a touchdown point on the seabed at a longitudinal distance *d*_{c} from the vessel, and
operating a side scan sonar (SSS) in an immersed state at a longitudinal distance *d*_{S} from the vessel and positioned with respect to the vessel in a direction substantially opposite to said forward direction so as to detect the cable.

2. The method of claim 1, wherein the longitudinal distance *d*_{S} is comprised between 80% and 130% of the longitudinal distance *d*_{c}, if *d*_{c} is greater than 50 m and is comprised between (*d*_{c} -10 m) and (*d*_{c} + 10 m) if *d*_{c} is less than or equal to 50 m.

3. The method of claim 2, wherein *d*_{S} is comprised between 90% and 120% of the longitudinal distance *d*_{c}, if *d*_{c} is greater than 50 m.

4. The method of one of the preceding claims, wherein the side scan sonar is mounted to a remotely operated vehicle (ROV) linked to the vessel.

5. The method of one of the preceding claims, wherein the side scan sonar is mounted to a remotely operated towed vehicle (ROTV) linked to the vessel.

6. The method of claims 4 or 5, wherein the ROV or ROTV is equipped with auto-heading and auto-depth control systems.

7. The method of one of the preceding claims, wherein the side scan sonar comprises a pair of side-looking acoustic transducers, or transducer arrays, placed on the port and starboard sides, each transducer transmitting acoustic signals and receiving reflected acoustic signals, these reflected signals including the echoes reflected by the topographic features on the seabed.

8. The method of claim 7, further comprising the steps of:
converting the reflected acoustic signals into electric output signals and storing them in a recording medium;
displaying the stored signals on a display so as to visualise echoes originating from the port and starboard sides.

9. The method of claim 8, further comprising the step of:
transferring at least part of the information relative to the stored signals to a navigation display on which the geographical co-ordinates are visualised.

10. The method of claim 9, further comprising the steps of:
calculating from said stored signals the co-ordinates of the actual cable position at a given time;
visualising the co-ordinates of the nominal cable position on the navigation display, and
comparing the co-ordinates of the nominal cable position with the co-ordinates of the actual cable position.
